# EUROPÄISCHE PATENTSCHRIFT

(11) **EP 2 846 968 B1**
(45) Veröffentlichungstag und Bekanntmachung des Hinweises auf die Patenterteilung: **31.08.2016**
(21) Anmeldenummer: 13726416.4
(22) Anmeldetag: 07.05.2013
(51) Int. Cl.: B23Q 16/10, F16D 55/00

(54) **KLEMMVORRICHTUNG**
CLAMPING DEVICE
DISPOSITIF DE BLOCAGE

(30) Priorität: 07.05.2012 DE 102012008797
(43) Veröffentlichungstag der Anmeldung: 18.03.2015
(73) Patentinhaber: Peiseler GmbH & Co. KG, 42855 Remscheid (DE)
(72) Erfinder: KORISCHEM, Benedikt, 40489 Düsseldorf (DE)
(74) Vertreter: Gesthuysen Patent- und Rechtsanwälte
(86) Internationale Anmeldenummer: PCT/EP2013/001342
(87) Internationale Veröffentlichungsnummer: WO 2013/167260

(56) Entgegenhaltungen:
- DE-B4- 10 332 424
- JP-A- 2009 083 013
- US-A1- 2008 289 915

## Beschreibung

Die Erfindung betrifft eine Klemmvorrichtung mit einem Gehäuse, einer Spindel, einem elastischen Klemmelement und einer mit der Spindel drehfest verbundenen Bremsscheibe, wobei die Spindel und das Gehäuse relativ zueinander drehbar sind, und wobei sich das Klemmelement im wesentlichen senkrecht zur Achse der Spindel erstreckt und durch Beaufschlagung mit einer Kraft aus einer ersten Position in eine zweite Position verbringbar ist, wobei die Spindel in einer der beiden Positionen geklemmt und in der anderen Position drehbar ist.

Klemmvorrichtungen werden im Werkzeugmaschinenbau, insbesondere bei Rundschalttischen oder Teilgeräten eingesetzt, um ein aufgespanntes Werkstück in einer gewünschten Winkelstellung zu positionieren, damit das Werkstück dann bearbeitet werden kann. Das Werkstück kann dabei je nach Ausführung des Rundschalttisches bzw. Teilgeräts horizontal oder vertikal angeordnet werden. Damit sich die vorgegebene Position eines eingespannten Werkstücks bei dessen Bearbeitung mit einer entsprechenden Bearbeitungsmaschine, beispielsweise einer Fräs-, Bohr- oder Schleifmaschine nicht ungewollt verändert, muss von der Klemmvorrichtung eine ausreichend hohe Klemmkraft auf die Spindel aufgebracht werden.

Die Klemmung kann entweder formschlüssig, beispielsweise durch eine Planverzahnung, die eingekoppelt wird oder reibschlüssig durch das Andrücken einer Bremsscheibe an ein ortsfestes Gehäuse erfolgen. Die Ausgestaltung einer formschlüssigen Positionierung der Spindel bzw. eines Werkstücks hat den Nachteil, dass die Anzahl der möglichen Teilschritte und somit die Anzahl der möglichen Positionen durch die Anzahl der Zähne der Planverzahnung vorgegeben ist, so dass unter Umständen eine bestimmte Position eines Werkstücks nicht realisierbar ist. Aus diesem Grunde wird insbesondere bei Teilgeräten, die eine hohe Positioniergenauigkeit aufweisen sollen, vorzugsweise eine reibschlüssige Klemmung der Spindel gegenüber dem feststehenden Gehäuse realisiert.

Aus der DE 103 32 424 B4 ist ein Rundschalttisch mit einer Klemmvorrichtung bekannt, bei dem die Klemmvorrichtung eine mit der Spindel verbundene Bremsscheibe, mehrere sich im Gehäuse abstützende Federelemente und einen hydraulisch oder pneumatisch betätigbaren, den Federelementen entgegenwirkenden Kolben aufweist. Im drucklosen Zustand des Kolbens erfolgt die Klemmung der Spindel dadurch, dass ein dünner, lippenartiger am Gehäuse ausgebildeter Klemmkörper durch die Federelemente gegen die Bremsscheibe gedrückt wird. Wird der Kolben dagegen mit einem Druckmedium beaufschlagt, so wirkt der Kolben der Federkraft des Federelements entgegen, so dass der Klemmkörper nicht gegen die Bremsscheibe gedrückt wird und sich somit die Bremsscheibe ungehindert mit der Spindel mitdrehen kann.

Zur Erzeugung einer hohen Klemmkraft und damit auch eines hohen Klemm- und Haltemoments ist die Federkraft herkömmlicher Federelemente jedoch in der Regel nicht ausreichend, so dass in der Praxis zumeist pneumatische oder hydraulische Systeme mit einem Kolben zur Erzeugung der Klemmkraft eingesetzt werden. Die Verwendung eines hydraulischen Systems hat dabei den Nachteil, dass aufgrund des hohen Betriebsdrucks die Anforderungen an die Zuleitungen, Dichtungen und Druckerzeuger relativ hoch sind, was die Kosten des hydraulischen Systems erhöht. Dieses Problem besteht zwar bei pneumatischen Systemen nicht, hier ist jedoch aufgrund des relativ geringen Betriebsdrucks in der Regel auch nur eine relativ geringe Klemmkraft erreichbar, da sich die Klemmkraft aus dem Produkt von Kolbenfläche und Klemmdruck ergibt.

Aus der JP 2009 08 3013 ist eine Klemmvorrichtung nach dem Oberbegriff des beigefügten Anspruchs 1 bekannt.

Der vorliegenden Erfindung liegt daher die Aufgabe zugrunde, eine Klemmvorrichtung zur Verfügung zu stellen, mit der bei möglichst einfacher konstruktiver Gestaltung hohe Klemmkräfte bzw. Haltemomente erzielt werden können.

Diese Aufgabe ist bei der eingangs beschriebenen Klemmvorrichtung mit den Merkmalen des Patentanspruchs 1 dadurch gelöst, dass das Klemmelement einen äußeren Abschnitt, einen inneren Abschnitt und einen Klemmabschnitt aufweist, wobei der äußerer Abschnitt und der Klemmabschnitt auf gegenüberliegenden Seiten des Klemmelements angeordnet sind und wobei der Abstand des äußeren Abschnitts zur Spindel größer ist als der Abstand des Klemmabschnitt zur Spindel und der Abstand des Klemmabschnitt zur Spindel größer ist als der Abstand des inneren Abschnitts zur Spindel. Außerdem ist ein Abstützelement vorgesehen, das mit dem Gehäuse fest verbunden oder am Gehäuse ausgebildet und dem äußeren Abschnitt des Klemmelements gegenüberliegend angeordnet ist. Dem Klemmabschnitt des Klemmelements gegenüberliegend angeordnet ist ein Gegenklemmabschnitt, der an der Bremsscheibe ausgebildet ist, die auf der dem Abstützelement gegenüberliegenden Seite des Klemmelements angeordnet ist. Die im Wesentlichen axial gerichtete Kraft greift derart am inneren Abschnitt des Klemmelements an, dass der äußere Abschnitt des Klemmelements in der geklemmten Position der Spindel am Abstützelement und der Klemmabschnitt des Klemmelements am Gegenklemmabschnitt der Bremsscheibe anliegt, während in der nicht geklemmten Position der Spindel zumindest der Klemmabschnitt des Klemmelements einen Abstand vom Gegenklemmabschnitt der Bremsscheibe aufweist, so dass er nicht an diesem anliegt.

Durch das der Erfindung zugrunde liegende Klemmprinzip, welches dem eines einseitigen Hebels ähnlich ist, wird eine Klemmkraftverstärkung erreicht, die umso größer ist, je größer der Abstand zwischen dem inneren Abschnitt des Klemmelement, an dem die Kraft angreift, und dem Klemmabschnitt ist und je geringer der Abstand zwischen dem äußeren Abschnitt des Klemmelements, der im geklemmten Zustand am Abstützelement anliegt, und dem Klemmabschnitt ist.

Die Beaufschlagung des Klemmelements mit einer Kraft erfolgt vorzugsweise mit Hilfe eines aktivierbaren Kraftelements, wobei im Rahmen der Erfindung das Kraftelement sowohl Druckluft oder Drucköl als auch ein insbesondere pneumatisch oder hydraulisch betätigbares Bauteil, insbesondere ein Kolben sein kann. Ein derartiger Kolben greift dabei am inneren Abschnitt des Klemmelements an, der vorzugsweise möglichst nahe am inneren Rand des Klemmelements angeordnet ist, so dass der wirksame "Hebelarm" möglichst groß ist.

Gemäß einer vorteilhaften Ausgestaltung der Erfindung weisen der äußere Abschnitt und/oder der innere Abschnitt und/oder der Klemmabschnitt des Klemmelements eine nach außen gewölbte Kontaktfläche auf. Die Ausbildung von nach außen gewölbten Kontaktflächen führt zu einer Verringerung der Flächenpressung, die an der Berührungsfläche des Klemmelements mit dem Abstützelement bzw. der Bremsscheibe oder dem Kolben auftritt. Da die maximal zulässige Spannung (Herz'sche Pressung), die in der Mitte der Berührungsfläche zweier elastischer Körper auftreten darf, bei einer gewölbten Kontaktfläche wesentlich größer ist als bei einer scharfkantigen Kontaktfläche, kann durch die Ausbildung von nach außen gewölbten Kontaktflächen die maximal zulässige Kraft, mit der das Klemmelement beaufschlagt werden kann, erhöht werden, was zu einer weiteren Erhöhung der Klemmkraft führt. Zur Reduzierung der auftretenden hohen Flächenpressungen können vorteilhafterweise auch die übrigen kraftübertragenden Flächen nach außen gewölbte Kontaktflächen aufweisen. Derartige, nach außen gewölbte Kontaktflächen können daher beispielsweise auch am Abstützelement, am Gegenklemmabschnitt der Bremsscheibe oder am Kolben ausgebildet sein.

Zur weiteren Erhöhung der Klemmkraft ist die Bremsscheibe vorteilhafterweise derart angeordnet und ausgebildet, dass der Gegenklemmabschnitt der Bremsscheibe in der geklemmten Position der Spindel mit seiner dem Klemmabschnitt des Klemmelements abgewandten Seite an einem gegenüberliegenden Gehäuseabschnitt anliegt. Hierdurch kann die Klemmwirkung der Bremsscheibe auf einfache Art und Weise verstärkt werden. Zur Reduzierung der auftretenden Flächenpressung kann auch die dem Klemmabschnitt des Klemmelements abgewandte Seite der Bremsscheibe und/oder der gegenüberliegende Gehäuseabschnitt eine nach außen gewölbte Kontaktfläche aufweisen.

Eingangs ist ausgeführt worden, dass das Klemmelement durch Beaufschlagung mit einer Kraft aus einer ersten Position in eine zweite Position verbringbar ist, wobei die Spindel in einer der beiden Positionen geklemmt und in der anderen Position drehbar ist. Durch diese Formulierung soll zum Ausdruck gebracht werden, dass mit der erfindungsgemäßen Klemmvorrichtung sowohl eine aktive Klemmung als auch eine passive Klemmung möglich ist, d.h. durch Beaufschlagung des Klemmelements mit einer Kraft kann entweder die Spindel geklemmt oder die Klemmung gelöst werden.

Bei der ersten Variante der erfindungsgemäßen Klemmvorrichtung drückt die Kraft auf die der Bremsscheibe gegenüberliegende Seite des Klemmelements, wobei das Klemmelement durch Beaufschlagung mit einer Kraft aus einer ersten Position, in der die Spindel drehbar ist, in eine zweite Position verbringbar ist, in der die Spindel geklemmt ist. Bei dieser Variante der Klemmvorrichtung ist vorzugsweise auf der dem Abstützelement gegenüberliegenden Seite des äußeren Abschnitts des Klemmelements ein Abstandselement zwischen dem Klemmelement und dem Gehäuse angeordnet. Das Abstandselement ist dabei derart dimensioniert, dass das Klemmelement mit seinem Klemmabschnitt nicht am Gegenklemmabschnitt der Bremsscheibe anliegt, wenn das Klemmelement nicht mit einer Kraft beaufschlagt ist. Durch das Abstandselement soll somit gewährleistet werden, dass im entspannten Zustand (Klemmelement wird nicht mit einer Kraft beaufschlagt) die Bremsscheibe nicht zwischen dem Klemmelement und dem Gehäuseabschnitt eingeklemmt wird.

Gemäß der zweiten Variante der erfindungsgemäßen Klemmvorrichtung drückt die Kraft auf die der Bremsscheibe zugewandte Seite des Klemmelements, wobei das Klemmelement durch Beaufschlagung mit einer Kraft aus einer ersten Position, in der die Spindel geklemmt ist, in eine zweite Position verbringbar ist, in der die Spindel drehbar ist. Bei dieser Variante der Klemmvorrichtung sind das Klemmelement, die Bremsscheibe und das Abstützelement derart dimensioniert und zueinander angeordnet, dass das Klemmelement zwischen dem Abstützelement und dem Gegenklemmabschnitt der Bremsscheibe eingeklemmt ist, wenn keine Kraft auf den inneren Abschnitt des Klemmelements wirkt. Wird bei dieser Variante das Klemmelement am inneren Abschnitt mit einer Kraft beaufschlagt, so führt dies dazu, dass der Klemmabschnitt des Klemmelements vom Gegenklemmabschnitt der Bremsscheibe weggedrückt wird, wodurch die Bremsscheibe nicht mehr geklemmt ist und somit die Spindel drehbar ist.

Damit die von dem Klemmelement auf die Bremsscheibe ausgeübte Klemmkraft zu einer Klemmung der Spindel führt, ist es erforderlich, dass die Bremsscheibe mit der Spindel drehfest verbunden ist. Hierbei wird es in der Praxis herstellungstechnisch häufig vorteilhaft sein, wenn die Spindel und die Bremsscheibe zwei separate Bauteile sind, wobei die Bremsscheibe dann fest mit der Spindel verbunden, insbesondere verschraubt ist. Alternativ dazu kann die Bremsscheibe jedoch auch einstückig mit der Spindel ausgebildet sein, so dass die Bremsscheibe bzw. das als Bremsscheibe fungierende Bauteil Teil der Spindel ist.

Im Einzelnen gibt es nun eine Vielzahl von Möglichkeiten, die erfindungsgemäße Klemmvorrichtung auszugestalten und weiterzubilden. Dazu wird verwiesen sowohl auf die dem Patentanspruch 1 nachgeordneten Patentansprüche als auch auf die nachfolgende Beschreibung bevorzugter Ausführungsbeispiele in Verbindung mit der Zeichnung. In der Zeichnung zeigen
- Fig. 1: ein erstes vereinfachtes Ausführungsbeispiel einer Klemmvorrichtung als Teil eines Teilgeräts, im geklemmten und im nicht geklemmten Zustand, jeweils im Schnitt,
- Fig. 2: ein erstes Ausführungsbeispiel eines Klemmelements als Teil einer Klemmvorrichtung, im Schnitt,
- Fig. 3: ein zweites vereinfachtes Ausführungsbeispiel einer Klemmvorrichtung, im geklemmten und im nicht geklemmten Zustand, jeweils im Schnitt und
- Fig. 4: ein zweites Ausführungsbeispiel eines Klemmelements als Teil einer Klemmvorrichtung, im Schnitt.

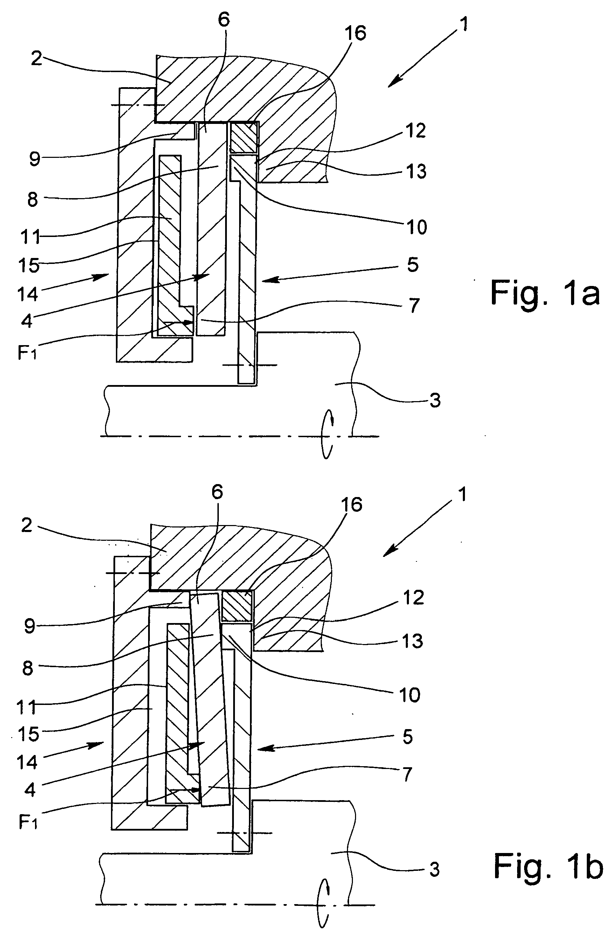

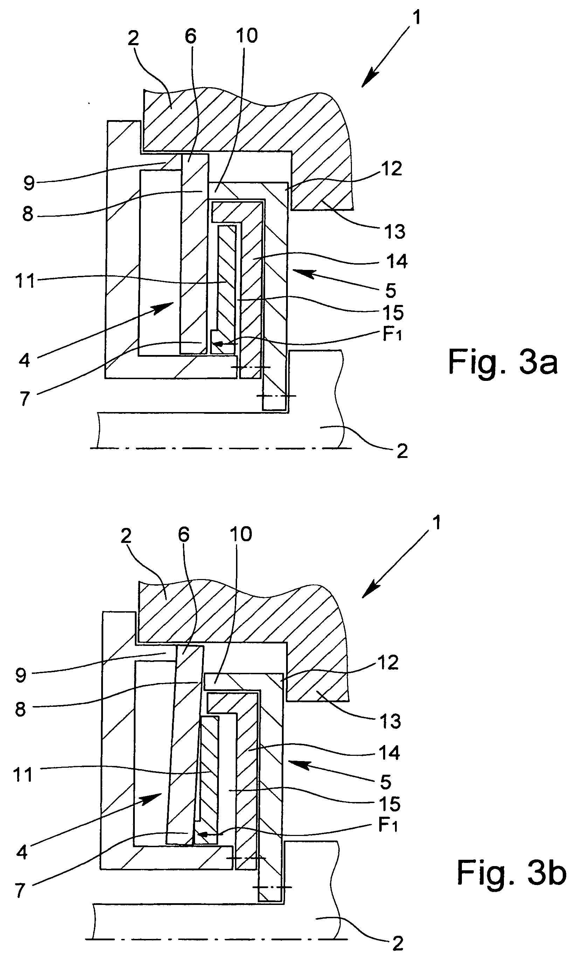

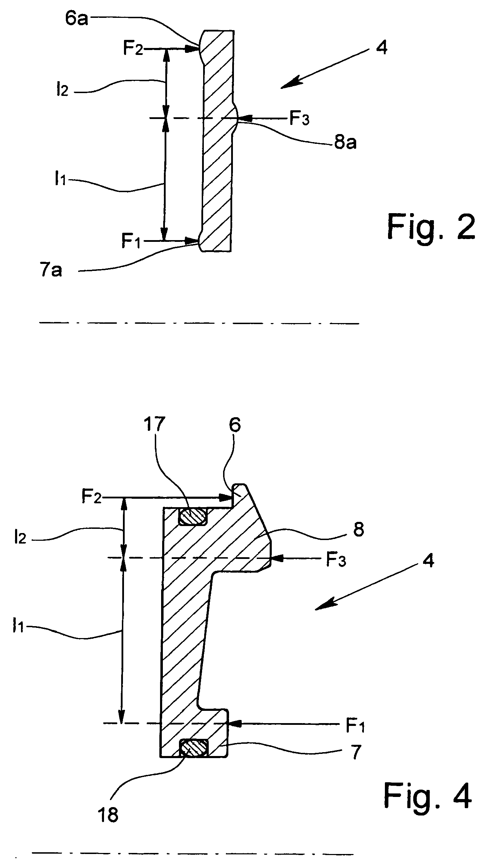

Die Fig. 1 und 3 zeigen zwei verschiedene Ausführungsbeispiele einer erfindungsgemäßen Klemmvorrichtung 1 als Teil einer Werkzeugmaschine, insbesondere eines Teilgeräts oder eines Rundschalttischs. Die Fig. 2 und 4 zeigen jeweils ein Ausführungsbeispiel eines Klemmelements 4 der erfindungsgemäßen Klemmvorrichtung 1.

Die in den Fig. 1 und 3 dargestellten Ausführungsbeispiele der Klemmvorrichtung 1 weisen ein Gehäuse 2, eine in dem Gehäuse 2 drehbar gelagerte Spindel 3, ein ringförmiges Klemmelement 4 und eine mit der Spindel 3 fest verbundene, beispielsweise verschraubte Bremsscheibe 5 auf. Das funktional zur Klemmvorrichtung 1 gehörende Gehäuse 2 stellt gleichzeitig das Gehäuse des Teilgeräts oder des Rundschalttisches dar, wobei das Gehäuse 2 selber aus mehreren Gehäuseteilen bestehen kann, die miteinander verbunden sind. Die in den Fig. 1 und 3 dargestellte Klemmvorrichtung 1 kann dazu dienen, ein aufgespanntes Werkstück in einer beliebigen Winkelstellung der Spindel 3 zu positionieren, so dass das Werkstück anschließend in der gewünschten Position mittels einer Bearbeitungsmaschine bearbeitet werden kann.

Wie aus den Figuren ersichtlich ist, weist das Klemmelement 4 einen äußeren Abschnitt 6, einen inneren Abschnitt 7 und einen Klemmabschnitt 8 auf. Der äußere Abschnitt 6 und der Klemmabschnitt 8 sind dabei auf gegenüberliegenden Seiten des Klemmelements 4 angeordnet, wobei dem äußeren Abschnitt 6 ein Abstützelement 9 und dem Klemmabschnitt 8 ein Gegenklemmabschnitt 10 der Bremsscheibe 5 gegenüberliegend angeordnet ist. Der innere Abschnitt 7 des Klemmelements 4 ist der Bereich, an dem die axial gerichtete Kraft F₁ am Klemmelement 4 angreift, wobei bei dem Ausführungsbeispiel gemäß Fig. 1 der äußere Abschnitt 6 und der innere Abschnitt 7 auf derselben Seite des Klemmelements 4 angeordnet sind. Im Unterschied dazu sind bei dem Ausführungsbeispiel gemäß Fig. 3 der äußere Abschnitt 6 und der innere Abschnitt 7 auf gegenüberliegenden Seiten des Klemmelements 4 angeordnet.

Sowohl bei dem Ausführungsbeispiel gemäß Fig. 1 als auch bei dem Ausführungsbeispiel gemäß Fig. 3 ist der Abstand des äußeren Abschnitts 6 zur Spindel 3 größer als der Abstand des Klemmabschnitts 8 zur Spindel 3. Außerdem ist der Abstand des Klemmabschnitts 8 zur Spindel 3 größer als der Abstand des inneren Abschnitts 7 zur Spindel 3. Bei dem ringförmigen Klemmelement 4 weist somit der äußere Abschnitt 6 den größten Radius und der innere Abschnitt 7 den kleinsten Radius auf, während der Klemmabschnitt 8 zwischen dem äußeren Abschnitt 6 und dem inneren Abschnitt 7 angeordnet ist, wobei jedoch der Abstand zwischen dem äußeren Abschnitt 6 und dem Klemmabschnitt 8 geringer ist als der Abstand zwischen dem Klemmabschnitt 8 und dem inneren Abschnitts 7.

In Fig. 2 ist sowohl der Hebelarm l₁ zwischen dem Kraftangriffpunkt am inneren Abschnitt 7 und dem Klemmabschnitt 8 als auch der Hebelarm l₂ zwischen dem äußeren Abschnitt 6 und dem Klemmabschnitt 8 eingezeichnet. Daraus ist ersichtlich, dass die Klemmkraftverstärkung der am Berührungspunkt zwischen dem Klemmabschnitt 8 des Klemmelements 4 und dem Gegenklemmabschnitt 10 der Bremsscheibe 5 wirkenden Kraft F₃ relativ zur am inneren Abschnitt angreifenden Kraft F₁ um so größer ist, je größer das Hebelverhältnis l₁ / l₂ ist. Das Verhältnis der Kraft F₃ zur Kraft F₁ kann somit durch folgende Formel beschrieben werden: F₃ = (1 + l₁/l₂) * F₁.

Außerdem ist anhand des in Fig. 2 dargestellten Klemmelements 4 ersichtlich, dass bei dieser bevorzugten Ausgestaltung der äußere Abschnitt 6, der innere Abschnitt 7 und der Klemmabschnitt 8 des Klemmelements 4 jeweils eine nach außen gewölbte Kontaktfläche 6a, 7a, 8a aufweisen. Entsprechende nach außen gewölbte Kontaktflächen können auch am Abstützelement 9, am Gegenklemmabschnitt 10 der Bremsscheibe 5 oder am Kolben 11 ausgebildet sein.

Die Beaufschlagung des Klemmelements 4 mit einer Kraft F₁ erfolgt bei den dargestellten Ausführungsbeispielen mittels eines vorzugsweise pneumatisch betätigbaren Kolbens 11, der am inneren Abschnitt 7 des Klemmelements 4 angreift. Alternativ dazu kann jedoch auch auf die Verwendung eines Kolbens verzichtet werden und der Druck direkt auf das Klemmelement 4 wirken. Auf der dem Klemmabschnitt 8 des Klemmelements 4 abgewandten Seite 12 des Gegenklemmabschnitts 10 der Bremsscheibe 5 ist in dem in Fig. 1 und 3 dargestellten Ausführungsbeispielen noch ein Gehäuseabschnitt 13 angeordnet, an dem der Gegenklemmabschnitt 10 der Bremsscheibe 5 in der geklemmten Position der Spindel 3 anliegt.

Wird der Kolben 11 mit Druck beaufschlagt, so führt dies dazu, dass sich der Kolben 11 zunächst aus der in Fig. 1a dargestellten Position in Richtung der Kraft F₁ nach rechts bewegt, bis der Kolben 11 am inneren Abschnitt 7 des Klemmelements 4 anliegt. Erhöht sich der Druck weiter, so wird sowohl der äußere Abschnitt 6 gegen das Abstützelement 9 als auch der Klemmabschnitt 8 gegen den Gegenklemmabschnitt 10 der Bremsscheibe 5 gedrückt, wodurch die Bremsscheibe 5 und damit auch die Spindel 3 geklemmt wird (Fig. 1b). Die am äußeren Abschnitt 6 und am Klemmabschnitt 8 wirkenden Kräfte sind in Fig. 2 und 4 jeweils mit F₂ und F₃ bezeichnet. Dadurch, dass der Klemmabschnitt 8 des Klemmelements 4 gegen den Gegenklemmabschnitt 10 der Bremsscheibe 5 drückt, wird die dem Klemmabschnitt 8 abgewandte Seite 12 des Gegenklemmabschnitts 10 der Bremsscheibe 5 gegen den gegenüberliegenden Gehäuseabschnitt 13 gedrückt, was zu einer weiteren Klemmkrafterhöhung führt.

Zur Führung des Kolbens 11 ist ein Zylinder 14 vorgesehen, in dem der Kolben 11 beweglich angeordnet ist, wobei zwischen dem Kolben 11 und dem Zylinder 14 ein Druckraum 15 ausgebildet ist. Wie aus Fig. 1 ersichtlich ist, ist dabei das Abstützelement 9 Teil des Zylinders 14, d.h. einstückig mit dem Zylinder 14 ausgebildet. Über den Zylinder 14 kann dabei auch eine einfache Abdichtung des Druckraums 15 zur Spindel 3 realisiert werden, wozu insbesondere entsprechende Dichtelemente verwendet werden können.

Bei dem in Fig. 1 dargestellten Ausführungsbeispiel der Klemmvorrichtung 1 ist auf der dem Abstützelement 9 gegenüberliegenden Seite des äußeren Abschnitts 6 des Klemmelements 4 ein ringförmiges Abstandselement 16 zwischen dem Klemmelement 4 und dem Gehäuse 2 angeordnet. Das Abstandselement 16 ist dabei so dimensioniert, dass das Klemmelement 4 mit seinem Klemmabschnitt 8 nicht am Gegenklemmabschnitt 10 der Bremsscheibe 5 anliegt, wenn das Klemmelement 4 nicht mit einer Kraft F₁ beaufschlagt ist. Dadurch wird verhindert, dass die Bremsscheibe 5 im entspannten Zustand ungewollt zwischen dem Klemmelement 4 und dem Gehäuseabschnitt 13 eingeklemmt wird, weil beispielsweise der Kolben 11 nach einem Klemmvorgang nicht wieder in seine vorgeschriebene Ausgangsposition zurückfährt, auch wenn der Druckraum 15 nicht mit Druck beaufschlagt ist.

Bei dem Ausführungsbeispiel der Klemmvorrichtung 1 gemäß Fig. 3 ist das Klemmelement 4 zwischen dem Abstützelement 9 und dem Gegenklemmabschnitt 10 der Bremsscheibe 5 eingeklemmt, wenn der Kolben 11 nicht mit Druck beaufschlagt ist, d.h. keine Kraft F₁ am inneren Abschnitt 7 des Klemmelements 4 angreift, so wie es in Fig. 3a dargestellt ist. Das Klemmelement 4 ist dabei derart geformt, dass es durch das Abstützelement 9 und den Gegenklemmabschnitt 10 der Bremsscheibe 5 bei der Montage ähnlich einer Tellerfeder eingeklemmt wird, so dass eine Kraft F₃ auf die Bremsscheibe 5 bzw. den Gegenklemmabschnitt 10 der Bremsscheibe 5 wirkt, auch ohne dass eine Kraft F₁ auf das Klemmelement 4 einwirkt, d.h. auch im nicht mit Druck beaufschlagten Zustand der Klemmvorrichtung 1. Eine weitere Erhöhung der Klemmkraft ist dadurch erreichbar, dass in der in Fig. 3a dargestellten Position das Klemmelement 4 auf der der Bremsscheibe 5 abgewandten Seite mit Druck beaufschlagt wird. Hierdurch wird das Klemmelement 4 mit seinem Klemmabschnitt 8 zusätzlich gegen den Gegenklemmabschnitt 10 der Bremsscheibe 5 gedrückt.

Zum Lösen der Klemmung muss der Druckraum 15 mit Druck beaufschlagt werden, so dass der Kolben 11 gegen den inneren Abschnitt 7 des Klemmelements 4 drückt, was zu einer Auslenkung des Klemmelements 4 führt, wodurch der Klemmabschnitt 8 des Klemmelements 4 vom Gegenklemmabschnitt 10 der Bremsscheibe 5 wegbewegt wird. Der Klemmabschnitt 8 liegt dann nicht mehr am Gegenklemmabschnitt 10 an, so dass die Bremsscheibe 5 bzw. die Spindel 2 nicht mehr geklemmt wird (Fig. 3b).

Die Fig. 4 zeigt ein Ausführungsbeispiel eines ringförmigen Klemmelements 4, wie es grundsätzlich bei einer Klemmvorrichtung 1 gemäß Fig. 3 eingesetzt werden kann, d. h. bei einer Klemmvorrichtung 1, bei der die Spindel 3 im nicht mit Druck beaufschlagten Zustand geklemmt wird. Aus einem Vergleich mit dem Klemmelement 4 gemäß Fig. 2 ist zunächst ersichtlich, dass das Klemmelement 4 gemäß Fig. 4 nicht als flache Scheibe ausgebildet ist, sondern dass die Dicke des Klemmelements 4 über dessen Erstreckung vom inneren Abschnitt 7 zum äußeren Abschnitt 6 variiert. Der in Fig. 4 dargestellte Querschnitt des Klemmelements 4 ist dabei unter Berücksichtigung der zur Verfügung stehenden Einbauverhältnisse derart optimiert, dass die Spannungsverteilung innerhalb des Klemmelements 4 möglichst gleichmäßig ist. Dabei ist in erster Linie entscheidend, dass insbesondere der äußere Abschnitt 6 mit dem Abstützelement 9 und der Klemmabschnitt 8 mit dem Gegenklemmabschnitt 10 der Bremsscheibe 5 erfindungsgemäß zusammen wirken.

Insgesamt ist eine Klemmvorrichtung 1 angegeben, die konstruktiv relativ einfach aufgebaut ist, insbesondere ein konstruktiv sehr einfaches Klemmelement 4 aufweist, gleichzeitig jedoch eine hohe Klemmkraftverstärkung ermöglicht, so dass auch bei einer pneumatischen Klemmung ein ausreichend hohes Klemmmoment erzeugt werden kann.

## Patentansprüche

1. Klemmvorrichtung mit einem Gehäuse (2), einer Spindel (3), einem elastischen Klemmelement (4) und einer mit der Spindel (3) drehfest verbundenen Bremsscheibe (5), wobei die Spindel (3) und das Gehäuse (2) relativ zueinander drehbar sind, und wobei sich das Klemmelement (4) im wesentlichen senkrecht zur Achse der Spindel (3) erstreckt und durch Beaufschlagung mit einer Kraft (F₁) aus einer ersten Position in eine zweite Position verbringbar ist, wobei die Spindel (3) in einer der beiden Positionen geklemmt und in der anderen Position drehbar ist,
wobei das Klemmelement (4) einen äußeren Abschnitt (6), einen inneren Abschnitt (7) und einen Klemmabschnitt (8) aufweist, wobei der äußerer Abschnitt (6) und der Klemmabschnitt (8) auf gegenüberliegenden Seiten des Klemmelements (4) angeordnet sind und wobei der Abstand des äußeren Abschnitts (6) zur Spindel (3) größer ist als der Abstand des Klemmabschnitt (8) zur Spindel (3) und der Abstand des Klemmabschnitt (8) zur Spindel (3) größer ist als der Abstand des inneren Abschnitts (7) zur Spindel (3),
wobei ein mit dem Gehäuse (2) verbundenes oder am Gehäuse (2) ausgebildetes Abstützelement (9) vorgesehen ist, das dem äußeren Abschnitt (6) des Klemmelements (4) gegenüberliegend angeordnet ist,
wobei die Bremsscheibe (5) auf der dem Abstützelement (9) gegenüber liegenden Seite des Klemmelements (4) angeordnet ist und einen Gegenklemmabschnitt (10) aufweist, der dem Klemmabschnitt (8) des Klemmelements (4) gegenüberliegend angeordnet ist, und
wobei die im Wesentlichen axial gerichtete Kraft (F₁) am inneren Abschnitt (7) des Klemmelements (4) angreift, wobei in der geklemmten Position der Spindel (3) der äußere Abschnitt (6) des Klemmelements (4) am Abstützelement (9) und der Klemmabschnitt (8) des Klemmelements (4) am Gegenklemmabschnitt (10) der Bremsscheibe (5) anliegt, während in der nicht geklemmten Position der Spindel (3) zumindest der Klemmabschnitt (8) des Klemmelements (4) nicht am Gegenklemmabschnitt (10) der Bremsscheibe (5) anliegt,
**dadurch gekennzeichnet, dass**
das Klemmelement (4) ringförmig ist und in der Mitte des Klemmelements (4) eine die Spindel (3) mit radialem Abstand umgebend Öffnung ausgebildet ist.

2. Klemmvorrichtung nach Anspruch 1, **dadurch gekennzeichnet, dass** zur Beaufschlagung des Klemmelements (4) mit einer Kraft (F₁) ein Kolben (11) vorgesehen ist, wobei der Kolben (11) auf den inneren Abschnitt (7) des Klemmelements (4) einwirkt und vorzugsweise pneumatisch oder hydraulisch beaufschlagbar ist.

3. Klemmvorrichtung nach Anspruch 1 oder 2, **dadurch gekennzeichnet, dass** der äußere Abschnitt (6) und/oder der inneren Abschnitt (7) und/oder der Klemmabschnitt (8) des Klemmelements (4) eine nach außen gewölbte Kontaktfläche (6a, 7a, 8a) aufweisen.

4. Klemmvorrichtung nach einem der Ansprüche 1 bis 3, **dadurch gekennzeichnet, dass** das Abstützelement (9) und/oder der Gegenklemmabschnitt (10) der Bremsscheibe (5) eine nach außen gewölbte Kontaktfläche aufweisen, die mit dem äußere Abschnitt (6) bzw. dem Klemmabschnitt (8) des Klemmelements (4) zusammenwirken.

5. Klemmvorrichtung nach einem der Ansprüche 1 bis 4, **dadurch gekennzeichnet, dass** der Gegenklemmabschnitt (10) der Bremsscheibe (5) in der geklemmten Position der Spindel (3) mit seiner dem Klemmabschnitt (8) des Klemmelements (4) abgewandten Seite (12) an einem gegenüberliegenden Gehäuseabschnitt (13) anliegt.

6. Klemmvorrichtung nach Anspruch 5, **dadurch gekennzeichnet, dass** der Gegenklemmabschnitt (10) der Bremsscheibe (5) auf seiner dem Klemmabschnitt (8) des Klemmelements (4) abgewandten Seite (12) und/oder der Gehäuseabschnitt (13) eine nach außen gewölbte Kontaktfläche aufweisen.

7. Klemmvorrichtung nach einem der Ansprüche 2 bis 6, **dadurch gekennzeichnet, dass** ein Zylinder (14) vorgesehen ist, der auf der dem Klemmelement (4) abgewandten Seite des Kolbens (11) angeordnet ist, so dass zwischen dem Kolben (11) und dem Zylinder (14) ein Druckraum (15) ausgebildet ist.

8. Klemmvorrichtung nach einem der Ansprüche 1 bis 7, **dadurch gekennzeichnet, dass** die Kraft (F₁) auf die der Bremsscheibe (5) gegenüberliegende Seite des Klemmelements (4) drückt und das Klemmelement (4) durch Beaufschlagung mit einer Kraft (F₁) aus einer ersten Position, in der die Spindel (3) drehbar ist, in eine zweite Position verbringbar ist, in der die Spindel (3) geklemmt ist.

9. Klemmvorrichtung nach Anspruch 8, **dadurch gekennzeichnet, dass** auf der dem Abstützelement (9) gegenüberliegenden Seite des äußeren Abschnitts (6) des Klemmelements (4) ein Abstandselement (16) zwischen dem Klemmelement (4) und dem Gehäuse (2) angeordnet ist, das derart dimensioniert ist, dass das Klemmelement (4) mit seinem Klemmabschnitt (8) nicht am Gegenklemmabschnitt (10) der Bremsscheibe (5) anliegt, wenn das Klemmelement (4) nicht mit einer Kraft beaufschlagt ist.

10. Klemmvorrichtung nach einem der Ansprüche 1 bis 7, **dadurch gekennzeichnet, dass** die Kraft (F₁) auf die der Bremsscheibe (5) zugewandte Seite des Klemmelements (4) drückt und das Klemmelement (4) durch Beaufschlagung mit einer Kraft (F₁) aus einer ersten Position, in der die Spindel (3) geklemmt ist, in eine zweite Position verbringbar ist, in der die Spindel (3) drehbar ist.

11. Klemmvorrichtung nach einem der Ansprüche 1 bis 10, **dadurch gekennzeichnet, dass** die Bremsscheibe (5) einstückig mit der Spindel (3) ausgebildet ist.

## Claims

1. Clamping apparatus having a housing (2), a spindle (3), an elastic clamping element (4) and a brake disc (5) which is connected fixedly to the spindle (3) so as to rotate with it, wherein the spindle (3) and the housing (2) can be rotated relative to one another, and the clamping element (4) extending substantially perpendicularly with respect to the axis of the spindle (3), and it being possible for the clamping element to be moved out of a first position into a second position by way of loading with a force (F₁), the spindle (3) being clamped in one of the two positions and being rotatable in the other position,
the clamping element (4) having an outer section (6) an inner section (7) and a clamping section (8), the outer section (6) and the clamping section (8) being arranged on opposite sides of the clamping element (4), and the spacing of the outer section (6) from the spindle (3) being greater than the spacing of the clamping section (8) from the spindle (3), and the spacing of the clamping section (8) from the spindle (3) being greater than the spacing of the inner section (7) from the spindle (3),
a supporting element (9) which is connected to the housing (2) or is configured on the housing (2) being provided, which supporting element (9) is arranged so as to lie opposite the outer section (6) of the clamping element (4),
the brake disc (5) being arranged on that side of the clamping element (4) which lies opposite the supporting element (9), and having a counterclamping section (10) which is arranged so as to lie opposite the clamping section (8) of the clamping element (4), and
the substantially axially oriented force (F₁) acting on the inner section (7) of the clamping element (4), wherein in the clamped position of the spindle (3) the outer section (6) of the clamping element (4) bearing against the supporting element (9) and the clamping section (8) of the clamping element (4) bearing against the counterclamping section (10) of the brake disc (5), whereas in the non-clamped position of the spindle (3) at least the clamping section (8) of the clamping element (4) does not bear against the counterclamping section (10) of the brake disc (5),
**characterized in**
**that** the clamping element (4) is annular, and an opening which surrounds the spindle (3) at a radial spacing is configured in the centre of the clamping element (4).

2. Clamping apparatus according to Claim 1, **characterized in that** a piston (11) is provided to load the clamping element (4) with a force (F₁), the piston (11) acting on the inner section (7) of the clamping element (4) and it preferably being possible to load the said piston (11) pneumatically or hydraulically.

3. Clamping apparatus according to Claim 1 or 2, **characterized in that** the outer section (6) and/or the inner section (7) and/or the clamping section (8) of the clamping element (4) have/has an outwardly curved contact face (6a, 7a, 8a).

4. Clamping apparatus according to one of Claims 1 to 3, **characterized in that** the supporting element (9) and/or the counterclamping section (10) of the brake disc (5) have/has an outwardly curved contact face, which contact faces interact with the outer section (6) or the clamping section (8) of the clamping element (4).

5. Clamping apparatus according to one of Claims 1 to 4, **characterized in that**, in the clamped position of the spindle (3), the counterclamping section (10) of the brake disc (5) bears with its side (12) which faces away from the clamping section (8) of the clamping element (4) against a housing section (13) which lies opposite.

6. Clamping apparatus according to Claim 5, **characterized in that**, on its side (12) which faces away from the clamping section (8) of the clamping element (4), the counterclamping section (10) of the brake disc (5) and/or the housing section (13) have/has an outwardly curved contact face.

7. Clamping apparatus according to one of Claims 2 to 6, **characterized in that** a cylinder (14) is provided which is arranged on that side of the piston (11) which faces away from the clamping element (4), with the result that a pressure space (15) is configured between the piston (11) and the cylinder (14).

8. Clamping apparatus according to one of Claims 1 to 7, **characterized in that** the force (F₁) presses on that side of the clamping element (4) which lies opposite the brake disc (5), and the clamping element (4) can be moved out of a first position, in which the spindle (3) is rotatable, into a second position, in which the spindle (3) is clamped, by way of loading with a force (F₁).

9. Clamping apparatus according to Claim 8, **characterized in that** a spacer element (16) is arranged between the clamping element (4) and the housing (2) on that side of the outer section (6) of the clamping element (4) which lies opposite the supporting element (9), which spacer element (16) is dimensioned in such a way that the clamping element (4) does not bear with its clamping section (8) against the counterclamping section (10) of the brake disc (5) if the clamping element (4) is not loaded with a force.

10. Clamping apparatus according to one of Claims 1 to 7, **characterized in that** the force (F₁) presses on that side of the clamping element (4) which faces the brake disc (5), and the clamping element (4) can be moved out of a first position, in which the spindle (3) is clamped, into a second position, in which the spindle (3) is rotatable, by way of loading with a force (F₁).

11. Clamping apparatus according to one of Claims 1 to 10, **characterized in that** the brake disc (5) is configured in one piece with the spindle (3).

## Revendications

1. Dispositif de blocage comprenant un boîtier (2), une broche (3), un élément de blocage élastique (4) et un disque de frein (5) connecté de manière solidaire en rotation à la broche (3), la broche (3) et le boîtier (2) pouvant tourner l'un par rapport à l'autre, et l'élément de blocage (4) s'étendant essentiellement perpendiculairement par rapport à l'axe de la broche (3) et pouvant être amené par sollicitation avec une force (F₁) depuis une première position dans une deuxième position, la broche (3) étant bloquée dans l'une des deux positions et pouvant tourner dans l'autre position,
l'élément de blocage (4) présentant une portion extérieure (6), une portion intérieure (7) et une portion de blocage (8), la portion extérieure (6) et la portion de blocage (8) étant disposées sur des côtés opposés de l'élément de blocage (4) et la distance de la portion extérieure (6) à la broche (3) étant plus grande que la distance de la portion de blocage (8) à la broche (3) et la distance de la portion de blocage (8) à la broche (3) étant plus grande que la distance de la portion intérieure (7) à la broche (3),
un élément d'appui (9) connecté au boîtier (2) ou réalisé sur le boîtier (2) étant prévu, lequel est disposé à l'opposé de la portion extérieure (6) de l'élément de blocage (4),
le disque de frein (5) étant disposé du côté de l'élément de blocage (4) situé à l'opposé de l'élément d'appui (9) et présentant une portion de blocage conjuguée (10) qui est disposée à l'opposé de la portion de blocage (8) de l'élément de blocage (4), et
la force (F₁) orientée essentiellement axialement s'exerçant au niveau de la portion intérieure (7) de l'élément de blocage (4), la portion extérieure (6) de l'élément de blocage (4), dans la position bloquée de la broche (3), s'appliquant contre l'élément d'appui (9) et la portion de blocage (8) de l'élément de blocage (4) s'appliquant contre la portion de blocage conjuguée (10) du disque de frein (5), tandis que dans la position non bloquée de la broche (3), au moins la portion de blocage (8) de l'élément de blocage (4) ne s'applique pas contre la portion de blocage conjuguée (10) du disque de frein (5),
**caractérisé en ce que**
l'élément de blocage (4) est de forme annulaire et une ouverture entourant la broche (3) à distance radiale est réalisée au centre de l'élément de blocage (4).

2. Dispositif de blocage selon la revendication 1, **caractérisé en ce que** pour solliciter l'élément de blocage (4) avec une force (F₁), il est prévu un piston (11), le piston (11) agissant sur la portion intérieure (7) de l'élément de blocage (4) et pouvant être sollicité de préférence de manière pneumatique ou hydraulique.

3. Dispositif de blocage selon la revendication 1 ou 2, **caractérisé en ce que** la portion extérieure (6) et/ou la portion intérieure (7) et/ou la portion de blocage (8) de l'élément de blocage (4) présentent une surface de contact courbée vers l'extérieur (6a, 7a, 8a).

4. Dispositif de blocage selon l'une quelconque des revendications 1 à 3, **caractérisé en ce que** l'élément d'appui (9) et/ou la portion de blocage conjuguée (10) du disque de frein (5) présentent une surface de contact courbée vers l'extérieur, qui coopère avec la portion extérieure (6), respectivement la portion de blocage (8) de l'élément de blocage (4).

5. Dispositif de blocage selon l'une quelconque des revendications 1 à 4, **caractérisé en ce que** la portion de blocage conjuguée (10) du disque de frein (5), dans la position bloquée de la broche (3), s'applique avec son côté (12) opposé à la portion de blocage (8) de l'élément de blocage (4) contre une portion de boîtier opposée (13).

6. Dispositif de blocage selon la revendication 5, **caractérisé en ce que** la portion de blocage conjuguée (10) du disque de frein (5), sur son côté (12) opposé à la portion de blocage (8) de l'élément de blocage (4) et/ou la portion de boîtier (13) présentent une surface de contact courbée vers l'extérieur.

7. Dispositif de blocage selon l'une quelconque des revendications 2 à 6, **caractérisé en ce qu'**un cylindre (14) est prévu, lequel est disposé sur le côté du piston (11) opposé à l'élément de blocage (4), de telle sorte qu'entre le piston (11) et le cylindre (14) soit réalisé un espace de pression (15).

8. Dispositif de blocage selon l'une quelconque des revendications 1 à 7, **caractérisé en ce que** la force (F₁) presse sur le côté de l'élément de blocage (4) opposé au disque de frein (5) et l'élément de blocage (4) peut être amené par sollicitation avec une force (F₁) depuis une première position dans laquelle la broche (3) peut tourner, dans une deuxième position dans laquelle la broche (3) est bloquée.

9. Dispositif de blocage selon la revendication 8, **caractérisé en ce qu'**un élément d'espacement (16) est disposé entre l'élément de blocage (4) et le boîtier (2) du côté de la portion extérieure (6) de l'élément de blocage (4) opposé à l'élément d'appui (9), lequel élément d'espacement est dimensionné de telle sorte que l'élément de blocage (4) ne s'applique pas avec sa portion de blocage (8) contre la portion de blocage conjuguée (10) du disque de frein (5) lorsque l'élément de blocage (4) n'est pas sollicité avec une force.

10. Dispositif de blocage selon l'une quelconque des revendications 1 à 7, **caractérisé en ce que** la force (F₁) presse sur le côté de l'élément de blocage (4) tourné vers le disque de frein (5) et l'élément de blocage (4) peut être amené par sollicitation avec une force (F₁) d'une première position dans laquelle la broche (3) est bloquée, dans une deuxième position dans laquelle la broche (3) peut tourner.

11. Dispositif de blocage selon l'une quelconque des revendications 1 à 10, **caractérisé en ce que** le disque de frein (5) est réalisé d'une seule pièce avec la broche (3).
